# FASCICULE DE BREVET EUROPEEN

(11) **EP 2 048 408 B1**
(45) Date de publication et mention de la délivrance du brevet: **15.04.2015**
(21) Numéro de dépôt: 08017090.5
(22) Date de dépôt: 29.09.2008
(51) Int. Cl.: F16F 9/06, F16F 9/16, B64C 25/60

(54) **Amortisseur d'un véhicule**
Stoßdämpfer eines Fahrzeugs
Vehicle shock absorber

(30) Priorité: 11.10.2007 FR 0707131
(43) Date de publication de la demande: 15.04.2009
(73) Titulaire: Airbus Helicopters, 13725 Marignane Cedex (FR)
(72) Inventeur: Lassus, Vincent, 13001 Marseille (FR); Talon, Benjamin, 46000 Cahors (FR); Lopez, Cédric, 13760 Saint Cannat (FR)
(74) Mandataire: GPI & Associés

(56) Documents cités:
- EP-A- 0 252 825
- EP-A- 0 280 904
- EP-A- 1 333 190
- DE-A1- 2 419 424
- FR-A- 2 695 698
- GB-A- 556 148
- GB-A- 2 011 018
- GB-A- 2 170 294
- US-A- 4 061 295
- US-A- 4 807 860

## Description

La présente invention concerne un amortisseur d'un véhicule et notamment un amortisseur agencé sur le train d'atterrissage d'un giravion.

L'invention se situe donc dans le domaine technique des amortisseurs et plus particulièrement dans le domaine technique des amortisseurs de trains d'atterrissages de giravion.

Le document FR553667 décrit un premier amortisseur comportant un piston muni d'une tête traversée par une tige traversante, cette tige traversante présentant une tige supérieure et une tige inférieure de part et d'autre de la tête du piston.

La tête du piston coulisse alors dans une chambre de compression de l'amortisseur, les tiges inférieure et supérieure du piston se trouvant respectivement dans la partie inférieure et la partie supérieure de la chambre de compression.

De plus, la chambre de compression comporte une pluralité d'alésages radiaux, disposés longitudinalement sur sa périphérie, ces alésages radiaux débouchant sur un canal reliant la partie supérieure de la chambre de compression à sa partie inférieure. On note que chaque alésage est obturé par une valve.

Lorsque l'amortisseur est sollicité en compression, le piston effectue un mouvement translatif et expulse le fluide contenu dans la partie supérieure de la chambre de compression via les alésages radiaux.

Cette expulsion provoque un laminage du fluide qui génère ainsi un amortissement.

On note que la tête du piston masque les alésages radiaux les uns après les autres, au fur et à mesure que le piston progresse dans la chambre de compression. Par conséquent la section de fuite du fluide diminue avec la progression du piston ce qui permet d'augmenter progressivement l'amortissement généré par l'amortisseur.

Ce premier amortisseur remplit donc bien une fonction d'amortisseur. Néanmoins, si le piston se déplace à faible vitesse, on comprend que l'amortissement sera quasiment inexistant. En outre, étant inversement proportionnel à la dimension des alésages, un alésage de grande taille facilement réalisable induit un amortissement faible.

Le document FR2601097 présente un deuxième amortisseur pourvu d'un piston coulissant de façon étanche à l'intérieur d'une chambre de compression.

Le piston étant de forme cylindrique, la base inférieure du piston pénétrant dans la chambre de compression est munie d'orifices longitudinaux.

Ces orifices permettent de mettre en relation la chambre de compression de l'amortisseur avec une chambre hydraulique insérée dans la tige du piston.

Lors d'un déplacement axial du piston, provoqué par la compression de l'amortisseur, le fluide de la chambre de compression est laminé par les orifices longitudinaux pour pénétrer dans la chambre hydraulique, ce qui est à l'origine de l'amortissement réalisé par l'amortisseur.

De plus, la tige du piston enserre des moyens élastiques en contact avec la chambre hydraulique.

La chambre hydraulique se remplissant du fluide provenant de la chambre de compression via les orifices longitudinaux, le volume de cette chambre hydraulique tend à augmenter ce qui provoque la contraction des moyens élastiques.

Par conséquent, lors de l'atterrissage du giravion, le piston se déplace rapidement ce qui induit un laminage du fluide de la chambre de compression.

Par contre, en statique, lorsque le giravion est posé, le piston ne se déplacera pas rapidement. L'amortissement sera alors généré par la contraction des moyens élastiques.

Ce deuxième amortisseur permet donc de remplir une fonction d'amortissement, à la fois en fonction de la vitesse de déplacement du piston mais aussi en fonction de son déplacement, du fait respectivement des ouvertures longitudinales et des moyens élastiques.

Toutefois, contrairement au premier amortisseur, on constate que ce deuxième amortisseur ne prévoit pas d'alésages radiaux à section variable, les orifices longitudinaux n'étant pas prévus pour être notamment obturés. Le laminage du fluide, et l'amortissement en résultant, ne peuvent donc pas être modulés et adaptés suivant la situation rencontrée à l'aide de tels alésages. Cependant, le deuxième amortisseur est équipé d'une aiguille de laminage remplissant une fonction similaire.

On note que les caractéristiques techniques du premier amortisseur ne serait pas utilisables dans le cadre du deuxième amortisseur, les orifices de laminage étant d'une part longitudinaux et non pas radiaux, et, d'autre part, disposés sur le piston lui-même, ce piston ne pouvant donc pas masquer ses propres orifices.

EP 280 904 divulgue le préambule de la rev. 1.

La présente invention a pour objet de proposer un amortisseur d'un véhicule, et particulièrement un giravion, permettant de générer un amortissement proportionnel au déplacement et à la vitesse d'enfoncement du piston de l'amortisseur, l'amortissement devenant nécessairement progressif et doux.

Selon l'invention, un amortisseur est pourvu d'un corps dans lequel est disposée une chambre de compression annulaire. Ce corps encercle donc, entoure, une chambre de compression annulaire. Cet amortisseur est aussi muni d'au moins une chambre pneumatique de compensation ainsi que d'un piston de commande mobile par rapport au corps, le piston de commande possédant une tige qui saille du corps de l'amortisseur ainsi q'une tête qui coulisse dans la chambre de compression.

L'invention est remarquable en ce que, la chambre de compression solidarisée au corps comportant une ouverture radiale à section variable en opération en fonction du déplacement du piston, cet amortisseur est pourvu d'une chambre hydraulique de compensation qui accueille un premier fluide chassé de la chambre de compression annulaire par l'ouverture radiale à section variable lors d'un déplacement du piston de commande.

Par conséquent, lors d'un déplacement rapide du piston de commande, ce piston de commande chasse le premier fluide de la chambre de compression par l'ouverture radiale à section variable. Le laminage de ce premier fluide provoque un amortissement de la sollicitation subie par l'amortisseur.

Le premier fluide est alors dirigé vers une chambré hydraulique de compensation.

La section totale de l'ouverture radiale étant variable, l'amortissement sera progressif, cet amortissement étant de plus en plus important au fur et à mesure que la tête du piston de commande pénètre dans la chambre de compression.

De plus, l'amortisseur est muni d'une chambre pneumatique de compensation. Cette chambre pneumatique permet d'une part de compenser le déplacement du premier fluide lors d'une compression de l'amortisseur en augmentant le volume de la chambre hydraulique de compensation et, d'autre part, d'assurer une garde minimale pour le véhicule équipé de l'invention. En effet, la chambre pneumatique de compensation permet d'éviter que le piston de commande chasse intégralement le premier fluide de la chambre de compression en bloquant le piston de commande dans une position statique.

Par ailleurs, pour optimiser les dimensions de l'amortisseur, la chambre hydraulique de compensation est agencée à l'intérieur de la tige du piston de commande.

Avantageusement, l'ouverture radiale à section variable comporte une pluralité d'alésages radiaux, ménagés dans la chambre de compression et agencés selon une direction longitudinale de la chambre de compression annulaire. Les alésages radiaux sont alors masqués successivement par le piston de commande lorsque ce piston de commande se déplace, plus précisément quand la tête du piston de commande s'enfonce dans la chambre de compression du fait d'une compression de l'amortisseur.

Selon une autre variante de l'invention, les alésages radiaux sont réalisés suivant une hélice. Ainsi, un point donné du piston de commande ne passe pas devant l'intégralité des alésages ce qui diminue de manière spectaculaire l'usure du piston.

Quelle que soit la variante mise en oeuvre pour réaliser les alésages radiaux, le piston de commande masquant les alésages radiaux de la chambre de compression les uns après les autres lors de la compression de l'amortisseur, l'ouverture radiale présente une section qui diminue au fur et à mesure du déplacement du piston de commande. La section de fuite du premier fluide varie en diminuant lors d'une compression de l'amortisseur ce qui conduit à un amortissement progressif, cet amortissement devenant de plus en plus en important.

En outre, la chambre de compression annulaire étant munie d'une paroi interne cylindrique et d'une paroi externe cylindrique, la paroi interne entoure un tube cylindrique creux formant un premier canal, ce premier canal permettant de mettre en relation la chambre de compression et la chambre hydraulique de compensation.

On note que la paroi interne est séparée de l'axe longitudinal de la chambre de compression par une première distance inférieure à une deuxième distance séparant la paroi externe de cette chambre de compression.

De plus, le tube cylindrique creux est solidarisé à la paroi interne, la chambre de compression et le tube cylindrique constituant par exemple une seule et même pièce mécanique.

Enfin, le tube cylindrique creux peut saillir de la chambre de compression et s'enfoncer dans la tige du piston de commande.

Ainsi, le premier canal débouche sur la chambre hydraulique de compensation et peut donc amener le premier fluide jusqu'à cette chambre hydraulique de compensation.

Selon une première variante de l'invention, la chambre de compression annulaire étant munie d'une paroi interne cylindrique et d'une paroi externe cylindrique, l'ouverture radiale à section variable est ménagée dans la paroi externe.

La paroi interne entourant le tube cylindrique creux formant un premier canal, l'amortisseur comporte un deuxième canal pour relier hydrauliquement l'ouverture radiale à section variable au premier canal, ce deuxième canal étant agencé entre le corps de l'amortisseur et la chambre de compression.

Le premier fluide sort donc de la chambre de compression par l'ouverture radiale à section variable puis traverse successivement le deuxième puis le premier canal avant d'atteindre la chambre hydraulique de compensation.

Selon une deuxième variante de l'invention, la chambre de compression annulaire étant munie d'une paroi interne cylindrique et d'une paroi externe cylindrique, la paroi interne entourant un tube cylindrique creux formant un premier canal, l'ouverture radiale à section variable est ménagée dans la paroi interne et le tube cylindrique.

L'ouverture radiale à section variable débouche alors directement sur le premier canal.

Selon un premier mode réalisation, l'amortisseur est muni d'une première chambre pneumatique de compensation disposée à l'intérieur de la tige du piston de commande en étant agencée entre un fond de cette tige et la chambre hydraulique de compensation.

En fonction de la nature de cette première chambre pneumatique de compensation, un premier diviseur peut séparer la première chambre pneumatique de compensation de la chambre hydraulique de compensation.

Cette disposition est importante notamment lorsque le premier fluide est de l'huile, la première chambre pneumatique de compensation étant remplie d'un gaz pressurisé. En effet, le premier diviseur évite ainsi que le gaz se mélange à l'huile.

Avantageusement, le premier diviseur peut être réalisé à l'aide d'un premier piston diviseur mobile, ou encore avec une membrane déformable en fonction de la pression exercée sur cette dernière. La mise en oeuvre d'une membrane à la place d'un piston diviseur mobile est alors particulièrement inventive puisqu'elle permet d'éviter l'utilisation d'une pièce mobile susceptible de générer des fuites ou encore une usure prématurée du fait des frottements engendrés.

Selon une deuxième mode de réalisation, l'amortisseur comporte une deuxième chambre pneumatique.

La chambre de compression entourant un tube cylindrique creux formant un premier canal, l'amortisseur comportant un deuxième canal pour relier hydrauliquement l'ouverture radiale à section variable au premier canal, l'amortisseur est alors muni d'une deuxième chambre pneumatique de compensation disposée à l'intérieur du corps en étant agencée entre le deuxième canal et le corps.

La deuxième chambre pneumatique de compensation est ainsi disposée à l'extérieur du piston de commande.

Comme pour la première chambre pneumatique de compensation, un deuxième diviseur sépare la deuxième chambre pneumatique de compensation du deuxième canal. Le deuxième diviseur peut être réalisé à l'aide d'un deuxième piston diviseur mobile, ou encore avec une membrane déformable en fonction de la pression exercée sur cette dernière.

De préférence, l'amortisseur comportant une première et une deuxième chambres pneumatiques de compensation, une chambre pneumatique est à basse pression alors que l'autre chambre pneumatique est à haute pression.

Par exemple, la première chambre pneumatique de compensation est remplie d'un gaz à basse pression, comprise entre 4 et 10 bars, alors que la deuxième chambre pneumatique de compensation est remplie d'un gaz à haute pression, comprise entre 25 et 100 bars.

Cette disposition confère à l'invention une loi de ressort à double pente qui permet de gérer d'éventuelles variations de la masse du véhicule équipé de l'invention. Par exemple, sur un aéronef, ces variations de masse peuvent atteindre plusieurs tonnes suivant le chargement de cet aéronef.

Si l'amortisseur est défini à l'aide d'une loi de ressort simple, cette loi de ressort sera dimensionnée en fonction de la masse maximale atteignable par l'aéronef. Par suite, le piston de commande de l'amortisseur ne pourra parcourir qu'une distance extrêmement faible ce qui induit un amortissement limité.

A contrario, selon le deuxième mode de réalisation, l'amortisseur est muni d'une première et d'une deuxième chambres pneumatiques. La première chambre pneumatique étant rempli d'un gaz à basse pression, cette première chambre pourra dans un premier temps être comprimée ce qui permet au piston de commande de se déplacer et finalement de générer l'amortissement recherché. Dans un second temps, la deuxième chambre pneumatique va être sollicitée et bloquera le piston de commande dans une position statique afin de garantir une garde au sol minimale pour le véhicule.

Enfin, l'amortisseur comporte avantageusement un moyen de détente et de compression permettant au piston de commande de se déplacer.

L'amortisseur comportant un tube cylindrique creux dont une extrémité débouche sur la chambre hydraulique de compensation, le moyen de détente et de compression est pourvu d'un disque agencé à cette extrémité du tube cylindrique, le disque étant évidé en son centre pour ne pas obturer le premier canal formé par le tube cylindrique et ayant une périphérie externe présentant un contact étanche avec l'intérieur de la tige du piston de commande.

De plus, le moyen de détente et de compression comprend au moins un premier clapet anti-retour, éventuellement taré, obturant au moins une première perforation calibrée du disque.

En outre, le moyen de détente et de compression est muni d'au moins un deuxième clapet anti-retour, éventuellement taré obturant au moins une deuxième perforation calibrée de la tête du piston de commande, les deuxièmes perforations permettant de mettre en relation la chambre de compression et une chambre de détente ménagée à l'intérieur du piston de commande entre le disque et la tête.

Lors de la compression de l'amortisseur, la tête du piston de commande tend à s'éloigner du disque du moyen de détente et de compression. Par suite, le volume de la chambre de détente augmente ce qui génère une dépression dans cette chambre de détente.

A contrario, la pression exercée dans la chambre hydraulique de compensation augmente.

Les effets conjugués de la dépression générée dans la chambre de détente et de l'augmentation de pression dans la chambre hydraulique de compensation induisent un déplacement du premier clapet anti-retour, ce premier clapet n'obturant plus la première perforation du disque.

Le premier fluide peut alors passer de la première chambre hydraulique de compensation vers la chambre de détente ce qui permet au piston de commande de se déplacer.

On note qu'au contraire la surpression générée dans la chambre de compression maintient le deuxième clapet anti-retour contre les deuxièmes perforations de la tête de commande du piston.

Lors d'une détente de l'amortisseur, provoquée par exemple par le décollage d'un aéronef équipé de l'invention sur son train d'atterrissage, la tête du piston de commande se rapproche du disque du moyen de détente et de compression.

Le volume de la chambre de détente diminuant, la pression du premier fluide régnant dans cette chambre de détente augmente. Le premier fluide contenue dans la chambre de détente pousse alors le deuxième clapet anti-retour et pénètre ainsi dans la chambre de compression.

A contrario, on comprend que le premier clapet anti-retour reste plaqué contre les premières perforations.

De plus, le premier fluide contenu dans la chambre hydraulique de compensation retourne dans la chambre de compression en empruntant le premier canal, et éventuellement le deuxième canal selon le mode de réalisation choisi.

Le premier fluide retourne ainsi dans la chambre de compression ce qui permet au piston de commande de retrouver sa position d'origine.

L'invention et ses avantages apparaîtront avec plus de détails dans le cadre de la description qui suit avec des exemples de réalisation donnés à titre illustratif en référence aux figures annexées qui représentent :
- la figure 1, une coupe présentant un amortisseur selon un premier mode de réalisation,
- la figure 2, une coupe présentant un amortisseur selon un deuxième mode de réalisation,
- la figure 3, une vue isométrique de la chambre de compression munie sur sa paroi externe d'alésages radicaux disposés selon une hélice, et
- la figure 4, une vue isométrique de la chambre de compression munie sur sa paroi interne d'alésages radiaux disposés selon une hélice

Les éléments présents dans plusieurs figures distinctes sont affectés d'une seule et même référence.

Afin d'expliciter le fonctionnement de l'amortisseur, on considérera dans la suite du texte que l'invention est agencée sur un train d'atterrissage d'aéronef. Toutefois, cette application ne devrait pas être considéré comme limitative.

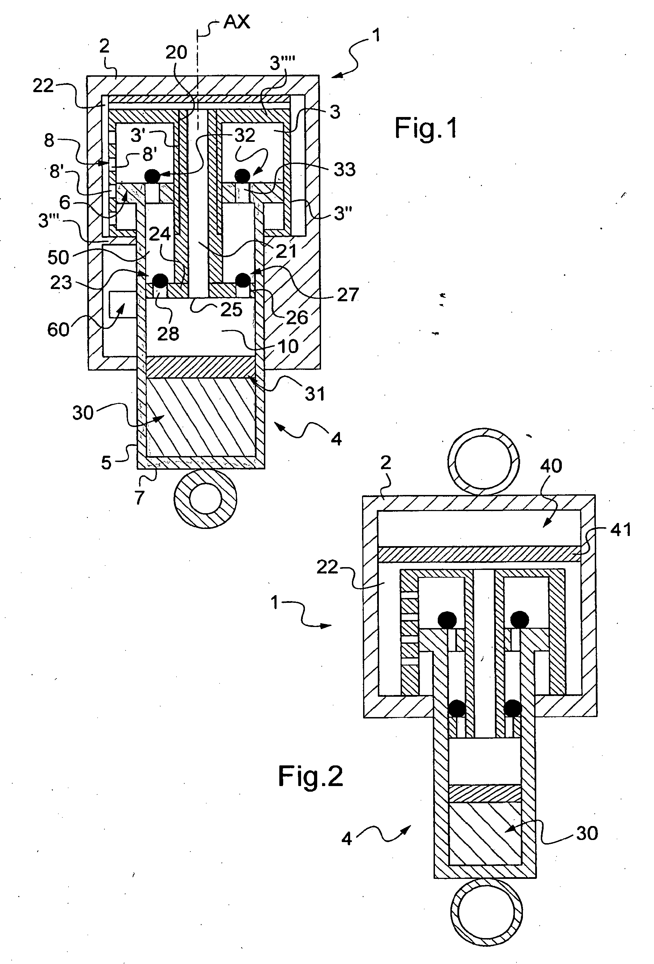

La figure 1 présente une coupe d'un amortisseur 1 selon un premier mode de réalisation comportant un corps 2 dans lequel coulisse un piston de commande 4.

En effet, ce corps 2 enserre une chambre de compression 3 annulaire et cylindrique, la base inférieure 3"' de cette chambre de compression étant solidarisée au corps 2.

La chambre de compression 3 est donc fixe par rapport au corps 2 qui l'accueille.

A contrario, le piston de commande 4 est muni d'une tige 5 pourvue d'une tête 6 d'un coté et d'un fond 7 de l'autre côté. La tête 6 du piston de commande 4 est alors agencée dans la chambre de compression 3 annulaire.

Ainsi, la tête 6 du piston de commande 4 est apte à effectuer un mouvement de translation selon l'axe longitudinal AX de la chambre de compression 3, en coulissant dans cette chambre de compression 3. Le piston de commande 4 est donc mobile par rapport au corps 2.

En outre, la paroi interne 3' de la chambre de compression entoure un tube creux 20 qui forme un premier canal, cette paroi interne 3' étant la paroi latérale de la chambre de compression 3 la plus proche de l'axe longitudinal AX.

De plus, la paroi interne 3' de la chambre de compression est solidarisée au tube creux 20, qui est par suite immobile par rapport au corps, la chambre de compression 3 et le tube creux pouvant constituer une seule et même pièce mécanique.

En s'éloignant radialement de l'axe longitudinal AX, on trouve donc successivement le premier canal 21, le tube creux 20 puis la paroi interne 3' de la chambre de compression 3.

Enfin, on note que le tube creux 20 saille de la chambre de compression 3 du côté du fond 7 du piston de commande 4, de manière à s'enfoncer plus profondément dans la tige 5 du piston de commande 4.

Par ailleurs, la chambre de compression annulaire est pourvue d'une ouverture à section variable 8. Cette ouverture à section variable possède alors une pluralité d'alésages radiaux 8' disposés les uns au dessus des autres selon l'axe longitudinal AX.

Conformément à une première variante de l'invention, ces alésages radiaux sont ménagés sur une paroi externe 3" de la chambre de compression, la paroi externe de la chambre de compression étant la paroi latérale la plus éloignée de l'axe longitudinal.

Selon cette variante, la paroi externe 3" et la base supérieure 3"" de la chambre de compression n'étant pas en contact avec le corps 2, les alésages radiaux 8' débouchent sur un deuxième canal 22, ce deuxième canal 22 étant disposé entre le corps 2 et la paroi externe 3" de la chambre de compression 3 puis entre le corps 2 et la base supérieure 3"" de la chambre dé compression 3.

Le deuxième canal 22 débouche alors sur le premier canal 21, de manière à mettre en relation ce premier canal 21 avec l'ouverture radiale à section variable 8.

Selon une deuxième variante non représentée, les alésages radiaux 8' sont ménagés sur la paroi interne 3' de la chambre de compression et sur le tube cylindrique, un alésage de la paroi interne étant en regard d'un alésage du tube cylindrique.

Le deuxième canal 22 devenant inutile, la paroi externe 3" et la base supérieure 3"" de la chambre de compression 3 peuvent être solidarisées au corps 2 par exemple.

Quelle que soit la variante, le premier canal débouche sur une chambre hydraulique de compensation 10 agencée à l'intérieur de la tige 5 du piston de commande 4.

Cette chambre hydraulique 10 de compensation est alors séparée d'une première chambre pneumatique 30 de compensation par un premier diviseur 31 mobile, réalisé à l'aide d'un premier piston diviseur ou d'une membrane en élastomère par exemple. On remarque que la première chambre pneumatique 30 de compensation est aussi agencée à l'intérieur de la tige 5 du piston de commande 4, en étant notamment adjacente au fond 7 de ce piston de commande 4.

Le premier diviseur a pour fonction d'éviter que le fluide remplissant la première chambre pneumatique 30 de compensation se déplace et se mélange au fluide remplissant la chambre hydraulique 10 de compensation,

Par conséquent l'amortisseur 1 est en mesure d'amortir des chocs, tels que les chocs subis par un train d'atterrissage de giravion.

L'amortisseur 1 est alors agencé sur la jambe de ce train d'atterrissage. La tige 5 du piston de commande 4 saillant du corps 2 de l'amortisseur, cette tige 4 peut ainsi être fixée à la fusée d'une roue.

Au moment de l'atterrissage, la roue du train d'atterrissage va pousser la tige 5 du piston de commande 4. Ce dernier se met alors à coulisser à l'intérieur de la chambre de compression 3.

Le premier fluide, de l'huile, contenu dans la chambre de compression 3 s'échappe alors vers l'ouverture radiale à section variable 8.

Si le piston de commande se déplace à une vitesse moyenne, voire rapide de l'ordre de 0.1 à 2 mètres par seconde, le laminage du premier fluide au travers de l'ouverture radiale à section variable 8 génère un amortissement du choc dû à l'atterrissage.

De plus, on note, que les alésages radiaux 8' de l'ouverture radiale 8 à section variable sont masqués les uns après les autres par la tête 6 du piston de commande 4. La section de fuite du premier fluide diminue au fur et à mesure de la progression du piston de commande 4 ce qui augmente d'autant l'effet de l'amortissement.

Le premier fluide rejoint alors le premier canal 21, éventuellement via le deuxième canal 22 en fonction de la variante utilisée, puis débouche dans la chambre hydraulique 10 de compensation.

Le volume de la chambre hydraulique 10 de compensation augmentant avec l'apport du premier fluide provenant de la chambre de compressions, la pression dans la chambre hydraulique 10 de compensation croit ce qui déplace le premier diviseur 31.

Ce premier diviseur 31 exerce ainsi un effort de compression sur la première chambre pneumatique 30 de compensation. Cette première chambre pneumatique 30 de compensation a alors trois fonctions distinctes.

En premier lieu, en se comprimant, elle permet d'augmenter le volume de la chambre hydraulique 10 de compensation. Le premier fluide s'échappant de la chambre de compression 3 est alors accueilli en totalité par la chambre hydraulique ce qui permet d'éviter un blocage de l'amortisseur 1.

En second lieu, lors de sa compression, la première chambre pneumatique 30 de compensation emmagasine une partie de l'énergie générée lors de l'atterrissage du giravion. On note d'ailleurs que si l'atterrissage survient à une vitesse très lente, le laminage du premier fluide sera faible ce qui induit que la majeure partie de ladite énergie est alors absorbée par la première chambre pneumatique 30 de compensation.

Enfin, en troisième lieu, la première chambre pneumatique de compensation 30 limite le déplacement du piston de commande 4. En effet, la compression de cette première chambre pneumatique de compensation 30 étant limitée, lorsque cette compression atteint son maximum, il ne devient plus possible de réduire le volume de la première chambre pneumatique de compensation 30 et donc d'augmenter le volume de là chambre hydraulique de compensation 10. Le piston de commande 4 est alors maintenu dans une position statique déterminée.

Par ailleurs, pour faciliter le déplacement du piston de commande 4, l'amortisseur 1 est muni d'un moyen de détente et de compression pourvu d'un disque 24 solidarisé à une extrémité 23 du tube creux 20, plus précisément à l'extrémité 23 du tube creux 20 la plus proche du fond 7 de la tige 5 du piston de commande 4.

On remarque que la périphérie externe 26 du disque 24 présente un contact étanche avec l'intérieur de la tige 5 du piston de commande 4.

De plus, le disque 24 possédant une pluralité de premières perforations 28, chaque première perforation est obturée par un premier clapet anti-retour 27, éventuellement taré. Par exemple, les premières perforations 28 sont constituées d'un anneau creux ménagé dans le disque 24, le premier clapet anti-retour 27 étant une rondelle obturant ledit anneau creux.

Enfin, le moyen de détente et de compression est muni de deuxièmes clapets anti-retour 32 obturant une pluralité de deuxièmes perforations 33 ménagées dans la tête 6 du piston de commande 4. Comme précédemment, les deuxièmes perforations 33 peuvent être constituées d'un anneau creux ménagé dans la tête 6 du piston de commande 4, le deuxième clapet anti-retour 32 étant une rondelle obturant ledit anneau creux.

Le moyen de détente et de compression comporte alors une chambre de détente 50 disposée à l'intérieur même du piston de commande 4 entre le disque 24 et la tête du piston de commande 4.

Finalement, la chambre de détente 50 entoure la partie saillante du tube creux 20, à savoir la partie du tube creux 20 qui saille de la chambre de compression 3.

Lorsque l'aéronef équipé de l'amortisseur se pose, l'amortisseur se comprime. Par suite, le piston de commande se déplace, la tête 6 de ce piston de commande 4 s'éloignant du disque 24. Ce déplacement induit une augmentation de pression dans la chambre de compression ce qui entraine une augmentation de pression dans la chambre de compensation et donc l'ouverture du premier clapet anti-retour 27.

Le premier fluide contenu dans la chambre de compensation hydraulique 10 peut ainsi se rendre dans la chambre de détente 50 en passant par les premières perforations 28. Le déplacement du piston de commande 4 n'est donc pas entravé par la présence de cette chambre de détente 50.

On note que le deuxième clapet anti-retour 32 reste au contraire en position en obturant les deuxièmes perforations 33.

Lorsque l'aéronef décolle par exemple, l'amortisseur se détend. Par suite, le piston de commande 4 se déplace, la tête 6 de ce piston de commande 4 se rapprochant du disque 24. Ce déplacement induit une augmentation de la pression dans la chambre de détente 50, ladite augmentation permettant de pousser le deuxième clapet anti-retour 32.

Le premier fluide contenu dans la chambre de détente 50 peut ainsi se rendre dans la chambre de compression 3 en passant par les deuxièmes perforations 33. Le déplacement du piston de commande 4 n'est donc pas entravé par la présence de cette chambre de détente 50.

On note que le premier clapet anti-retour 27 reste au contraire en position en obturant les premières perforations 28.

La figure 2 présente une deuxième mode de réalisation de l'invention.

L'amortisseur 1 est alors équipé d'une deuxième chambre pneumatique 40 de compensation agencée à l'intérieur du corps 2 et à l'extérieur du piston de commande 4.

Plus précisément, la deuxième chambre pneumatique 40 de compensation est agencée entre le deuxième canal 22 et le corps 2, un deuxième diviseur séparant la deuxième chambre pneumatique 40 de compensation du deuxième canal 22.

Les première et deuxième chambres pneumatiques 30, 40 de compensation, remplies d'azote par exemple sont alors soumises à des pressions distinctes. La première chambre pneumatique 30 de compensation peut ainsi être soumise à une basse pression, comprise entre 4 et 10 bars, alors que la deuxième chambre pneumatique 40 de compensation est soumise à une haute pression, comprise entre 25 et 100 bars.

Lors de son transfert de la chambre de compression 3 vers la chambre hydraulique 10 de compensation, le premier fluide va alors commencer par comprimer la première chambre pneumatique 30 de compensation.

Lorsque cette première chambre pneumatique 30 de compensation atteint une pression maximale, le premier fluide va alors presser la deuxième chambre pneumatique 40 de compensation.

Par ailleurs, conformément à la figure 1, il est possible de munir le piston de commande 4 d'une came de direction 60 classique si l'amortisseur est monté sur un train d'atterrissage directionnel. La came de direction permet alors de remettre la roue du train d'atterrissage dans un plan déterminé lorsque le giravion décolle et ne touche plus le sol.

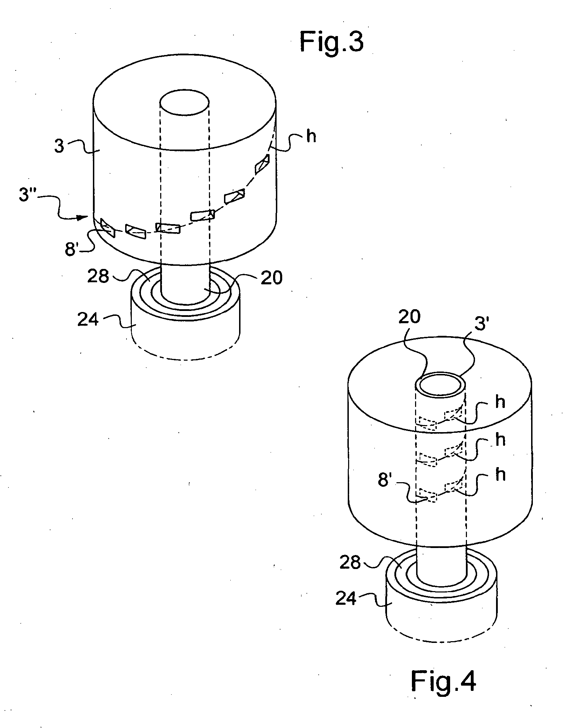

La figure 3 présente une vue isométrique de la chambre de compression 3, de l'amortisseur selon l'invention, munie sur sa paroi externe 3" d'alésages radiaux disposés selon une hélice h.

Conformément à cette variante, les alésages radiaux 8' ne se situent pas les uns au dessus des autres. Par conséquent, le piston de commande 4 étant uniquement apte à effectuer un mouvement translatif le long de l'axe longitudinal AX, un point donné du piston ne peut passer que devant un unique alésage radial 8'.

Or, le passage d'un point donné du piston devant un alésage étant destructif, l'usure du piston sera ainsi nettement ralenti en mettant la variante décrite par la figure 3.

De même, la figure 4 présente une vue isométrique de la chambre de compression 3 munie sur sa paroi interne 3' d'alésages radiaux disposés selon une hélice h. De même, le tube cylindrique comporte des alésages en vis-à-vis des alésages de la chambre de compression afin que le premier canal puisse communiquer avec l'intérieur de la chambre de compression.

Conformément, à la figure 3 ou la figure 4, l'ouverture radiale à section variable 8 comporte une pluralité d'alésages radiaux 8' ménagés dans une paroi de la chambre de compression, la paroi interne 3' ou la paroi externe 3"de cette chambre de compression, en étant disposés selon une hélice h.

Naturellement, la présente invention est sujette à de nombreuses variations quant à sa mise en oeuvre Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la chambre de détente 50 est optionnelle. Le moyen de détente n'est alors pas muni du disque 24 et du premier clapet anti-retour 27.

## Revendications

1. Amortisseur (1) pour un train d'atterrissage d'un giravion pourvu d'un corps (2) qui entoure une chambre de compression (3) annulaire, ledit amortisseur (1) étant muni d'au moins une chambre pneumatique (30, 40) de compensation ainsi que d'un piston de commande (4) mobile par rapport au corps (2), ledit piston de commande (4) possédant une tige (5) qui saille dudit corps (2) ainsi q'une tête (6) qui coulisse dans ladite chambre de compression (3), ladite chambre de compression (3) solidarisée au corps (2) comportant une ouverture radicale à section variable (8) en fonction du déplacement dudit piston, ledit amortisseur (1) étant pourvu d'une chambre hydraulique (10) de compensation qui accueille un premier fluide chassé de ladite chambre de compression (3) annulaire par ladite ouverture radiale à section variable (8) lors d'un déplacement dudit piston de commande (4),
**caractérisé en ce que** ladite chambre de compression (3) annulaire étant munie d'une paroi interne (3') cylindrique et d'une paroi externe (3") cylindrique, dans laquelle est ménagée ladite ouverture radiale, ladite paroi interne (3') entourant un tube cylindrique (20) creux formant un premier canal (21), ledit amortisseur (1) comporte un deuxième canal (22) pour relier hydrauliquement ladite ouverture radiale à section variable (8) au dit premier canal (21), ce deuxième canal (22) étant agencé entre ledit corps (2) et ladite chambre de compression (3), le premier canal (21) débouchant sur ladite chambre hydraulique de compensation (10) agencée à l'intérieur de la tige (5) du piston de commande (4), ainsi mettant en relation ladite chambre de compression (3) et ladite chambre hydraulique de compensation (10), une première chambre pneumatique (30) de compensation étant disposée à l'intérieur de la tige (5) dudit piston de commande (4) en étant agencée entre un fond (7) de cette tige (5) et ladite chambre hydraulique (10) de compensation.

2. Amortisseur selon la revendication 1,
**caractérisé en ce que** ladite ouverture radiale à section variable (8) comporte une pluralité d'alésages radiaux (8'), ménagés dans la chambre de compression (3) et agencés selon une direction longitudinale (AX) de ladite chambre de compression (3) annulaire, masqués successivement par ledit piston de commande (4) lorsque ce piston de commande (4) se déplace.

3. Amortisseur selon la revendication 1,
**caractérisé en ce que** ledit tube cylindrique (20) creux est solidarisé à ladite paroi interne (3').

4. Amortisseur selon l'une quelconque des revendications 1 ou 3,
**caractérisé en ce que** ledit tube cylindrique (20) creux saille de ladite chambre de compression (3).

5. Amortisseur selon l'une quelconque des revendications précédentes,
**caractérisé en ce que** l'ouverture radiale à section variable (8) comporte une pluralité d'alésages radiaux (8') ménagés dans une paroi (3', 3") de la chambre de compression (3) en étant disposés selon une hélice (h).

6. Amortisseur selon l'une quelconque des revendications précédentes,
**caractérisé en ce qu'**un premier diviseur (31) sépare ladite première chambre pneumatique (30) de compensation de ladite chambre hydraulique (10) de compensation.

7. Amortisseur selon la revendication 6,
**caractérisé en ce que** ledit premier diviseur (31) est un piston diviseur mobile.

8. Amortisseur selon la revendication 6,
**caractérisé en ce que** ledit premier diviseur (31) est une membrane.

9. Amortisseur selon l'une quelconque des revendications précédentes,
**caractérisé en ce que** ladite chambre de compression (3) entourant un tube cylindrique (20) creux formant un premier canal (21), ledit amortisseur (1) comportant un deuxième canal (22) pour relier hydrauliquement ladite ouverture radiale à section variable (8) au dit premier canal (21), ledit amortisseur (1) est muni d'une deuxième chambre pneumatique (40) de compensation disposée à l'intérieur dudit corps (2) en étant agencée entre ledit deuxième canal (22) et ledit corps (2).

10. Amortisseur selon la revendication 9,
**caractérisé en ce que** ladite deuxième chambre pneumatique (40) de compensation est disposée à l'extérieur dudit piston de commande (4).

11. Amortisseur selon l'une quelconque des revendications 9 à 10,
**caractérisé en ce qu'**un deuxième diviseur (41) sépare ladite deuxième chambre pneumatique (40) de compensation dudit deuxième canal (22).

12. Amortisseur selon la revendication 11,
**caractérisé en ce que** ledit deuxième diviseur (41) est un piston diviseur mobile.

13. Amortisseur selon la revendication 11,
**caractérisé en ce que** ledit deuxième diviseur (41) est une membrane.

14. Amortisseur selon l'une quelconque des revendications précédentes,
**caractérisé en ce que** ledit amortisseur comportant une première et une deuxième chambres pneumatiques (30, 40) de compensation, une chambre pneumatique (30) est à basse pression alors que l'autre chambre pneumatique (40) est à haute pression.

15. Amortisseur selon l'une quelconque des revendications précédentes,
**caractérisé en ce qu'**il comporte un moyen de détente et de compression (24, 27, 32, 33).

16. Amortisseur selon la revendication 15,
**caractérisé en ce que** ledit amortisseur (1) comportant un tube cylindrique (20) creux dont une extrémité (23) débouche sur ladite chambre hydraulique (10) de compensation, ledit moyen de détente et de compression est pourvu d'un disque (24) agencé à ladite extrémité (23), ledit disque (24) étant évidé en son centre (25) pour ne pas obturer ledit premier canal (21) formé par le tube cylindrique (20) et ayant une périphérie externe (26) présentant une contact étanche avec l'intérieur de ladite tige (5) dudit piston de commande (4).

17. Amortisseur selon la revendication 15,
**caractérisé en ce que** ledit moyen de détente et de compression comprend au moins un premier clapet anti-retour (27) taré obturant au moins une première perforation (28) dudit disque (24).

18. Amortisseur selon la revendication 15 à 17,
**caractérisé en ce que** ledit moyen de détente et de compression est muni d'au moins un deuxième clapet anti-retour (32) taré obturant au moins une deuxième perforations (33) de ladite tête (6) du piston de commande (4), lesdites deuxième perforations (33) permettant de mettre en relation ladite chambre de compression (3) et une chambre de détente (50) ménagée à l'intérieur dudit piston de commande (4) entre ledit disque (24) et ladite tête (6).

## Patentansprüche

1. Stoßdämpfer (1) für ein Landegestell eines Drehflügelflugzeugs mit einem Körper (2), der eine ringförmige Druckkammer (3) umschließt, wobei der Stoßdämpfer (1) mit mindestens einer pneumatischen Kompensationskammer (30, 40) sowie mit einem relativ zum Körper (2) beweglichen Steuerkolben (4) versehen ist, wobei der Steuerkolben (4) einen Stab (5) aufweist, die über den Körper (2) übersteht, sowie einen Kopf (6), der in der Druckkammer (3) gleitet, wobei die mit dem Körper (2) fest verbundene Druckkammer (3) eine radiale Öffnung (8) aufweist, deren Querschnitt in Abhängigkeit von der Bewegung des Kolbens variabel ist, wobei der Stoßdämpfer (1) mit einer Hydraulikkompensationskammer (10) versehen ist, die ein erstes Fluid aufnimmt, das aus der ringförmigen Druckkammer (3) durch die radiale Öffnung (8) mit variablem Querschnitt während einer Bewegung des Steuerkolbens (4) ausgespült wird,
**dadurch gekennzeichnet, dass** die ringförmige Druckkammer (3) mit einer zylinderförmigen Innenwand (3') und einer zylinderförmigen Außenwand (3") versehen ist, in der die radiale Öffnung ausgeführt ist, wobei die Innenwand (3') ein hohles Zylinderrohr (20) umschließt, welches einen ersten Kanal (21) bildet, wobei der Stoßdämpfer (1) einen zweiten Kanal (22) aufweist, um hydraulisch die radiale Öffnung (8) mit variablem Querschnitt mit dem ersten Kanal (21) zu verbinden, wobei der zweite Kanal (22) zwischen dem Körper (2) und der Druckkammer (3) angeordnet ist, wobei der erste Kanal (21) in der hydraulischen Kompensationskammer (10) mündet, die im Inneren des Stabs (5) des Steuerkolbens (4) angeordnet ist, wodurch die Druckkammer (3) und die hydraulische Kompensationskammer (10) miteinander verbunden sind, wobei eine erste pneumatische Kompensationskammer (30) im Inneren des Stabs (5) des Steuerkolbens (4) zwischen einem Boden (7) dieses Stabs (5) und der hydraulischen Kompensationskammer (10) angeordnet ist.

2. Stoßdämpfer nach Anspruch 1,
**dadurch gekennzeichnet, dass** die radiale Öffnung (8) mit variablem Querschnitt eine Mehrzahl radialer Bohrungen (8') aufweist, die in der Druckkammer (3) ausgeführt sind und in einer Längsrichtung der ringförmigen Kompensationskammer (3) angeordnet sind, die aufeinanderfolgend von dem Steuerkolben (4) verdecket werden, wenn dieser Steuerkolben (4) sich bewegt.

3. Stoßdämpfer nach Anspruch 1,
**dadurch gekennzeichnet, dass** das hohle zylinderförmigen Rohr (20) mit der Innenwand (3') fest verbunden ist.

4. Stoßdämpfer nach einem der Ansprüche 1 oder 3,
**dadurch gekennzeichnet, dass** das hohle zylinderförmige Rohr (20) aus der Druckkammer (3) vorsteht.

5. Stoßdämpfer nach einem der vorstehenden Ansprüche,
**dadurch gekennzeichnet, dass** die radiale Öffnung (8) mit variablem Querschnitt eine Mehrzahl radialer Bohrungen (8') aufweist, die in einer Wandung (3', 3") der Druckkammer (3) ausgeführt sind, wobei die Bohrungen entlang einer Spirale (h) angeordnet sind.

6. Stoßdämpfer nach einem der vorstehenden Ansprüche,
**dadurch gekennzeichnet, dass** eine erste Trennwand (31) die erste pneumatische Kompensationskammer (30) von der hydraulischen Kompensationskammer (10) abtrennt.

7. Stoßdämpfer nach Anspruch 6,
**dadurch gekennzeichnet, dass** die erste Trennwand (31) ein beweglicher Trennkolben ist.

8. Stoßdämpfer nach Anspruch 6,
**dadurch gekennzeichnet, dass** die erste Trennwand (31) eine Membran ist.

9. Stoßdämpfer nach einem der vorstehenden Ansprüche,
**dadurch gekennzeichnet, dass** die Druckkammer (3) ein hohles zylinderförmiges Rohr (20) umschließt, welches einen ersten Kanal (21) bildet, wobei der Stoßdämpfer (1) einen zweiten Kanal (22) aufweist, um die radiale Öffnung (8) mit variablem Querschnitt hydraulisch mit dem ersten Kanal (21) zu verbinden, wobei der Stoßdämpfer (1) mit einer zweiten pneumatischen Kompensationskammer (40) ausgerüstet ist, die im Inneren des Körpers (2) vorgesehen ist und die zwischen dem zweiten Kanal (22) und dem Körper (2) angeordnet ist.

10. Stoßdämpfer nach Anspruch 9,
**dadurch gekennzeichnet, dass** die zweite pneumatische Kompensationskammer (40) außerhalb des Steuerkolbens (4) angeordnet ist.

11. Stoßdämpfer nach einem der Ansprüche 9 bis 10,
**dadurch gekennzeichnet, dass** eine zweite Trennwand (41) die zweite pneumatische Kompensationskammer (40) von dem zweiten Kanal (22) trennt.

12. Stoßdämpfer nach Anspruch 11,
**dadurch gekennzeichnet, dass** die zweite Trennwand (41) ein beweglicher Trennkolben ist.

13. Stoßdämpfer nach Anspruch 11,
**dadurch gekennzeichnet, dass** die zweite Trennwand (41) eine Membran ist.

14. Stoßdämpfer nach einem der vorstehenden Ansprüche,
**dadurch gekennzeichnet, dass** der Stoßdämpfer eine erste und eine zweite pneumatische Kompensationskammer (30, 40) aufweist, wobei eine pneumatische Kammer (30) eine Niederdruckkammer ist, während die andere pneumatische Kammer (40) eine Hochdruckkammer ist.

15. Stoßdämpfer nach einem der vorstehenden Ansprüche,
**dadurch gekennzeichnet, dass** er ein Expansions- und Kompressionsmittel (24, 27, 32, 33) aufweist.

16. Stoßdämpfer nach Anspruch 15,
**dadurch gekennzeichnet, dass** der Stoßdämpfer (1) ein hohles zylinderförmiges Rohr (20) aufweist, dessen eines Ende (23) in der hydraulischen Kompensationskammer (10) mündet, wobei das Expansions- und Kompressionsmittel mit einer Scheibe (24) versehen ist, die an diesem Ende (23) angeordnet ist, wobei die Scheibe (24) in ihrer Mitte (25) eine Ausnehmung aufweist, um nicht den ersten Kanal (21) zu verschließen, der von dem zylinderförmigen Rohr (20) gebildet wird, und die einen Außenrand (26) aufweist, der in dichtem Kontakt mit der Innenseite des Stabs (5) des Steuerkolbens (4) steht.

17. Stoßdämpfer nach Anspruch 15,
**dadurch gekennzeichnet, dass** das Expansions- und Kompressionsmittel mindestens eine erste austarierte Rückschlagklappe (27) aufweist, die mindestens eine erste Perforierung (28) der Scheibe (24) verschließt.

18. Stoßdämpfer nach einem der Ansprüche 15 bis 17,
**dadurch gekennzeichnet, dass** das Expansion- und Kompressionsmittel mit mindestens einer zweiten austarierten Rückschlagklappe (32) versehen ist, die mindestens eine zweite Perforierung (33) des Kopfes (6) des Steuerkolbens (4) verschließt, wobei die zweiten Perforierungen (33) es ermöglichen, die Kompressionskammer (3) und eine Expansionskammer (50), die im Inneren des Steuerkolbens (4) zwischen der Scheibe (24) und dem Kopf (6) ausgebildet ist, miteinander zu verbinden.

## Claims

1. A shock absorber (1) for a landing gear of a rotorcraft, provided with a body (2) which surrounds an annular compression chamber (3), the said shock absorber (1) being equipped with at least one pneumatic compensation chamber (30, 40) and with a control piston (4) which is movable in relation to the body (2), the said control piston (4) having a rod (5), which projects from the said body (2), and a head (6), which slides in the said compression chamber (3), the said compression chamber (3), which is integral with the body (2), including a radial opening (8) whereof the cross section is variable as a function of displacement of the said piston, the said shock absorber (1) being provided with a hydraulic compensation chamber (10) which receives a first fluid that is driven out of the said annular compression chamber (3) through the said radial opening (8) of variable cross section when the said control piston (4) is displaced,
**characterised in that**, the said annular compression chamber (3) being equipped with a cylindrical inner wall (3') and a cylindrical outer wall (3") in which the said radial opening is made, the said inner wall (3') surrounding a hollow cylindrical tube (20) which forms a first duct (21), the said shock absorber (1) includes a second duct (22) for hydraulically connecting the said radial opening (8) of variable cross section to the said first duct (21), this second duct (22) being arranged between the said body (2) and the said compression chamber (3), the first duct (21) opening into the said hydraulic compensation chamber (10) which is arranged inside the rod (5) of the control piston (4), in this way bringing the said compression chamber (3) and the said hydraulic compensation chamber (10) into communication, a first pneumatic compensation chamber (30) being disposed inside the rod (5) of the said control piston (4) in a manner arranged between a base (7) of this rod (5) and the said hydraulic compensation chamber (10).

2. A shock absorber according to Claim 1, **characterised in that** the said radial opening (8) of variable cross section includes a plurality of radial bores (8') which are made in the compression chamber (3) and arranged in a longitudinal direction (AX) of the said annular compression chamber (3), and are screened successively by the said control piston (4) when this control piston (4) is displaced.

3. A shock absorber according to Claim 1, **characterised in that** the said hollow cylindrical tube (20) is integral with the said inner wall (3').

4. A shock absorber according to either of Claims 1 or 3, **characterised in that** the said hollow cylindrical tube (20) projects from the said compression chamber (3).

5. A shock absorber according to any one of the preceding claims, **characterised in that** the radial opening (8) of variable cross section comprises a plurality of radial bores (8') which are made in a wall (3', 3") of the compression chamber (3) in a manner disposed in a helix (h).

6. A shock absorber according to any one of the preceding claims, **characterised in that** a first divider (31) separates the said first pneumatic compression chamber (30) from the said hydraulic compensation chamber (10).

7. A shock absorber according to Claim 6, **characterised in that** the said first divider (31) is a movable divider piston.

8. A shock absorber according to Claim 6, **characterised in that** the said first divider (31) is a diaphragm.

9. A shock absorber according to any one of the preceding claims, **characterised in that**, the said compression chamber (3) surrounding a hollow cylindrical tube (20) which forms a first duct (21), the said shock absorber (1) comprising a second duct (22) for hydraulically connecting the said radial opening (8) of variable cross section to the said first duct (21), the said shock absorber (1) is equipped with a second pneumatic compensation chamber (40) disposed inside the said body (2) in a manner arranged between the said second duct (22) and the said body (2).

10. A shock absorber according to Claim 9, **characterised in that** the said second pneumatic compensation chamber (40) is disposed outside the said control piston (4).

11. A shock absorber according to any one of Claims 9 to 10, **characterised in that** a second divider (41) separates the said second pneumatic compensation chamber (40) from the said second duct (22).

12. A shock absorber according to Claim 11, **characterised in that** the said second divider (41) is a movable divider piston.

13. A shock absorber according to Claim 11, **characterised in that** the said second divider (41) is a diaphragm.

14. A shock absorber according to any one of the preceding claims, **characterised in that**, the said shock absorber including a first and a second pneumatic compensation chamber (30, 40), one pneumatic chamber (30) is at low pressure while the other pneumatic chamber (40) is at high pressure.

15. A shock absorber according to any one of the preceding claims, **characterised in that** it comprises a means for relaxation and compression (24, 27, 32, 33).

16. A shock absorber according to Claim 15, **characterised in that**, the said shock absorber (1) comprising a hollow cylindrical tube (20) whereof one end (23) opens into the said hydraulic compensation chamber (10), the said means for relaxation and compression is provided with a disc (24) that is arranged at the said end (23), the said disc (24) being pierced at its centre (25) in order not to close off the said first duct (21) that is formed by the cylindrical tube (20) and having an outer periphery (26) that makes a sealed contact with the inside of the said rod (5) of the said control piston (4).

17. A shock absorber according to Claim 15, **characterised in that** the said means for relaxation and compression comprises at least one first spring-loaded non-return valve (27) which closes off at least one first perforation (28) in the said disc (24).

18. A shock absorber according to Claim 15 to 17, **characterised in that** the said means for relaxation and compression is equipped with at least one second spring-loaded non-return valve (32) which closes off at least one second perforations (33) in the said head (6) of the control piston (4), the said second perforations (33) allowing the said compression chamber (3) and a relaxation chamber (50) which is made inside the said control piston (4) between the said disc (24) and the said head (6) to be brought into communication.
